# EUROPÄISCHE PATENTSCHRIFT

(11) **EP 3 133 303 B1**
(45) Veröffentlichungstag und Bekanntmachung des Hinweises auf die Patenterteilung: **09.10.2019**
(21) Anmeldenummer: 16182282.0
(22) Anmeldetag: 02.08.2016
(51) Int. Cl.: F16B 19/10, H01R 4/06

(54) **BLINDNIETELEMENT**
BLIND RIVET ELEMENT
ÉLÉMENT DE RIVET AVEUGLE

(30) Priorität: 18.08.2015 DE 102015113676
(43) Veröffentlichungstag der Anmeldung: 22.02.2017
(73) Patentinhaber: Profil Verbindungstechnik GmbH & Co. KG, 61381 Friedrichsdorf (DE)
(72) Erfinder: Diehl, Oliver, 61250 Usingen (DE); Lembach, Andreas, 64295 Darmstadt (DE)
(74) Vertreter: Manitz Finsterwald Patent- und Rechtsanwaltspartnerschaft mbB

(56) Entgegenhaltungen:
- DE-A1- 3 612 501
- DE-A1- 19 646 668
- DE-T2- 69 917 827
- US-A- 3 922 050

## Beschreibung

Die vorliegende Erfindung betrifft ein Blindnietelement zur Befestigung an einem Werkstück, wobei das Blindnietelement einen Hülsenkörper und ein durch den Hülsenkörper geführtes Bolzenelement umfasst. Typischerweise wird das Blindnietelement zunächst in ein Loch des Werkstücks eingebracht. Sodann wird der Hülsenkörper durch eine Axialbewegung des Bolzenelements relativ zu dem Hülsenkörper abschnittsweise verformt, um das Blindnietelement an dem Werkstück zu befestigen.

Ein solches Blindnietelement ist auch als Zugdornniet bekannt und wird häufig dann eingesetzt, wenn eine stabile und dauerhafte Verbindung mit einem lediglich von außen, d.h. einseitig zugänglichen Werkstück, z.B. einem geschlossenen Hohlkörper, hergestellt werden soll.

In einem beispielhaften Anwendungsfall wird ein Blindnietelement an einem Kraftstofftank befestigt, um einen Masseanschluss, d.h. einen Anschluss für eine elektrische Erdung des Kraftstoffstanks, bereitzustellen. Hierbei besteht eine Herausforderung darin, zusätzlich zu einer stabilen und dauerhaften Befestigung des Blindnietelements, welches als mechanischer Anschlusspunkt für eine Masseleitung dient, auch eine zuverlässige elektrische Verbindung zwischen dem Blindnietelement und dem Kraftstofftank herzustellen, sodass der Kraftstofftank bei angeschlossener Masseleitung tatsächlich geerdet ist. Eine zuverlässige elektrische Erdung ist gerade bei Kraftstofftanks besonders wichtig, da elektrostatische Ladungen auf der Oberfläche des Kraftstofftanks zu funkenträchtigen Entladungsvorgängen führen können, welche ein in dem Kraftstofftank befindliches Kraftstoffgemisch entzünden und eine Explosion des Kraftstofftanks nach sich ziehen könnten.

Eine elektrische Verbindung zwischen dem Werkstück und dem als Masseanschluss dienenden Blindnietelement ist allerding nicht unmittelbar garantiert, wenn ein herkömmliches Blindnietelement auf an sich bekannte Weise an dem Werkstück befestigt wird, und zwar selbst dann nicht, wenn sowohl das Werkstück als auch das Blindnietelement zumindest im Bereich ihres Zusammenwirkens aus elektrisch leitendem Metall gebildet sind. Ein Problem besteht darin, dass insbesondere das Werkstück häufig einen Schutzüberzug aufweist, der nicht oder nur vergleichsweise schlecht elektrisch leitfähig ist und der deshalb eine wirksame elektrische Verbindung zwischen dem Werkstück und dem Blindnietelement verhindert.

DE 36 12 501 A1 offenbart ein Blindnietelement mit den Merkmalen des Oberbegriffs von Anspruch 1. Ein ähnliches Blindnietelement ist ferner in US 3 922 050 A offenbart.

Es ist eine Aufgabe der Erfindung ein Blindnietelement der eingangs genannten Art anzugeben, welches eine zuverlässige mechanische und/oder elektrische Verbindung zwischen einem Werkstück und dem Blindnietelement gewährleistet, wenn das Blindnietelement an dem Werkstück befestigt ist.

Diese Aufgabe wird gelöst durch ein Blindnietelement mit den Merkmalen des Anspruchs 1 und durch ein Bliendnietelement mit den Merkmalen des Anspruchs 2. Beide Blindnietelemente weisen jeweils einen Hülsenkörper mit wenigstens einem Kontaktabschnitt auf, welcher derart angeordnet und ausgestaltet ist, dass der Kontaktabschnitt in eine Wandung des Lochs und/oder einen Bereich um das Loch einschneidet und/oder eine Verformung der Wandung des Lochs und/oder des Bereichs um das Loch bewirkt. So kann zwischen dem Werkstück und dem Blindnietelement beispielsweise ein elektrischer Kontakt hergestellt werden. Außerdem sichert der Kontaktabschnitt das Blindnietelement vor der Verformung des Hülsenkörpers an dem Werkstück. D.h. durch den Kontaktabschnitt ist das Blindnietelement an dem Werkstück vormontierbar.

Ferner ist es eine Aufgabe der Erfindung ein Verfahren zum Befestigen eines Blindnietelements anzugeben, durch das eine zuverlässige mechanische und elektrische Verbindung zwischen einem Werkstück und dem Blindnietelement hergestellt werden kann.

Ein erfindungsgemäßes Verfahren, welches diese Aufgabe löst, umfasst die Merkmale des Anspruchs 8.

Ein erfindungsgemäßes Blindnietelement besitzt den Vorteil, dass durch einen gesondert ausgebildeten Kontaktabschnitt des Hülsenkörpers eine elektrische Verbindung zumindest zwischen dem Werkstück und dem Hülsenkörper zuverlässig hergestellt wird, wenn das Blindnietelement an dem Werkstück befestigt wird. Sofern das Bolzenelement elektrisch leitend mit dem Hülsenkörper verbunden ist, besteht auch eine entsprechende elektrische Verbindung zwischen dem Werkstück und dem Bolzenelement, sodass beispielsweise eine Leitung zur elektrischen Erdung des Werkstücks einfach an das Bolzenelement angeschlossen werden kann. Zudem wirkt der Kontaktabschnitt als eine Art Verliersicherung bevor der Hülsenkörper zur abschließenden Befestigung des Blindnietelements an dem Werkstück verformt wird.

Der Kontaktabschnitt ist insbesondere so ausgebildet, dass er im Zuge eines Befestigens des Blindnietelements durch eine Schutzschicht oder einen Schutzüberzug des Werkstücks durchzuschneiden vermag, so dass der Kontaktabschnitt zumindest einen elektrisch leitfähigen Abschnitt des Werkstücks unmittelbar kontaktiert. Der Kontaktabschnitt ist vorzugsweise integral an einer Außenseite des Hülsenkörpers ausgebildet. Der Hülsenkörper ist z.B. zumindest abschnittsweise als ein Hohlzylinder ausgebildet.

Zur Befestigung des Blindnietelements wird das Blindnietelement mit seinem Hülsenkörper vorzugsweise in ein Loch des Werkstücks eingebracht, welches komplementär zu dem Hülsenkörper ausgebildet ist. Durch das Einbringen des Blindnietelements in das Loch kann das Blindnietelement an dem Werkstück vorfixiert werden. Der Durchmesser des Lochs und der Außendurchmesser des Hülsenkörpers sind vorzugsweise zur Herstellung eines - evtl. zusätzlichen - Presssitzes aufeinander abgestimmt. Zur eigentlichen (finalen) Befestigung des Blindnietelements wird der Hülsenkörper abschnittsweise vorzugsweise radial nach außen verformt, sodass ein in der Regel umlaufender Abschnitt des Hülsenkörpers das Werkstück im Bereich um das Loch formschlüssig hintergreift. Diese Verformung des Hülsenkörpers wird durch eine Axialbewegung des Bolzenelements bewirkt, beispielsweise indem der Hülsenkörper auf einer Schulter des Bolzenelements aufsitzt und in axialer Richtung komprimiert wird.

Vorzugsweise ist das Loch des Werkstücks, in welches das Blindnietelement eingebracht wird, bereits vorhanden. Es ist allerdings auch denkbar, dass das Loch durch das Blindnietelement erzeugt wird, insbesondere durch einen Stanzprozess (Einstanzen des Blindnietelements).

Gemäß einer Ausführungsform ist der Kontaktabschnitt von dem Hülsenkörper abgesetzt. Beispielsweise weist der Kontaktabschnitt einen oder mehrere Vorsprünge auf, welche sich von der Außenmantelfläche des Hülsenkörpers in radialer Richtung nach außen weg von dem Hülsenkörper erstrecken. Hierdurch wird - bei entsprechender Anpassung des äußeren Hülsenkörperdurchmessers an den Durchmesser des Lochs - die Wandung des Lochs im Zuge des Einbringens des Hülsenkörpers lokal mit einer vergleichsweise hohen Kraft pro Fläche beaufschlagt, sodass ein Vorsprung des Kontaktabschnitts das Werkstück lokal deformiert und in das Werkstück eingreift. Insbesondere greift ein solcher Vorsprung durch eine isolierende Schutzschicht des Werkstücks hindurch und stellt einen elektrischen Kontakt zu dem Werkstück her.

Gemäß einer weiteren Ausführungsform umfasst der Kontaktabschnitt wenigstens eine umlaufende Kante, insbesondere ein Gewinde. Beispielsweise kann der Hülsenkörper ein herkömmliches Außengewinde mit einer Steigung (z.B. ein Rechtsgewinde) aufweisen. Durch eine umlaufende Kante, welche einen Winkel zwischen der axialen Erstreckungsrichtung des Hülsenkörpers und der Erstreckungsrichtung der Kante einschließt, kann ein Einschneiden der Kante in die Wandung des Werkstücks begünstigt werden. Gleichzeitig kann der Hülsenkörper in das Loch eingeschraubt werden und so an dem Werkstück (vor-)fixiert werden.

Gemäß einer weiteren Ausführungsform umfasst der Kontaktabschnitt wenigstens eine Rippe, die sich in axialer und/oder Umfangsrichtung erstreckt. Eine solche Rippe kann alternativ oder ergänzend zu einem Gewinde vorgesehen werden. Der Kontaktabschnitt ist - unabhängig davon, ob der Kontaktabschnitt eine Rippe, eine umlaufende Kante oder eine Gewinde aufweist - vorzugsweise scharfkantig ausgebildet, um eine sichere elektrische Kontaktierung und/oder Fixierung des Hülsenkörpers an dem Werkstück zu gewährleisten.

Vorzugsweise weist der Hülsenkörper einen Flanschabschnitt mit einer Anlagefläche für das Werkstück auf. Der Flanschabschnitt ist insbesondere dafür vorgesehen eine Bewegung des Hülsenkörpers relativ zu dem Werkstück in axialer Richtung zu begrenzen, beispielsweise wenn der Flanschabschnitt im Zuge eines Einschraubens des Hülsenkörpers in das Loch des Werkstücks an dem Werkstück anschlägt. Der Kontaktabschnitt des Hülsenkörpers kann insbesondere in dem Bereich benachbart zu und/oder an der Anlagefläche des Flanschabschnitts vorgesehen sein. Es ist also auch möglich, Kontaktabschnitte sowohl an dem Flanschabschnitt als auch an einer Außenmantelfläche des Hülsenkörpers vorzusehen, um eine besonders sichere elektrische Kontaktierung des Werkstücks zu gewährleisten.

Gemäß einer weiteren Ausführungsform weisen das Bolzenelement und/oder der Hülsenkörper wenigstens einen Koppelabschnitt auf, welcher den Hülsenkörper und das Bolzenelement zumindest drehfest miteinander koppelt. Hierdurch kann einerseits eine auf das Bolzenelement ausgeübte Drehbewegung auf den Hülsenkörper übertragen werden, insbesondere um den Hülsenkörper in das Loch einzubringen und an dem Werkstück zu fixieren. Andererseits kann die drehfeste Kopplung dazu ausgenutzt werden, im Zuge des finalen Befestigens des Blindnietelements eine Drehung des Bolzenelements zugunsten einer Axialbewegung des Bolzenelements zu unterbinden, durch welche der Hülsenkörper abschnittsweise verformt wird.

Sofern das Bolzenelement und der Hülsenkörper zusätzlich zur drehfesten Kopplung in axialer Richtung miteinander gekoppelt sind, ist das Bolzenelement an dem Hülsenkörper vorteilhaft fixiert, sodass sich das Bolzenelement vor oder bei der Montage des Blindnietelements nicht ungewollt von dem Hülsenkörper löst.

Der Koppelabschnitt kann mehrere sich in axialer Richtung erstreckende Rippen umfassen. Hierdurch kann auf einfache Weise eine drehfeste Kopplung zwischen dem Hülsenkörper und dem Bolzenelement realisiert werden. Insbesondere kann jeweils ein Koppelabschnitt an dem Hülsenkörper und dem Bolzenelement vorgesehen werden, wobei die Koppelabschnitte ineinander greifen. In diesem Fall ist der Koppelabschnitt des Hülsenkörpers vorzugsweise radial innenseitig angeordnet.

Gemäß einer bevorzugten Ausführungsform ist der Koppelabschnitt derart ausgestaltet, dass der Hülsenkörper und das Bolzenelement bis zum Erreichen einen Schwellenwerts einer zwischen dem Hülsenkörper und dem Bolzenelement wirkenden Kraft miteinander gekoppelt sind. Hierdurch kann eine Befestigungsbewegung auf den Hülsenkörper zum Zwecke des Fixierens des Hülsenkörpers an dem Werkstück solange übertragen werden, bis sich die Koppelung durch Überschreiten des Schwellenwerts löst und eine weitere Befestigungsbewegung ausgeführt werden kann, ohne den Hülsenkörper herbei mitzudrehen und/oder axial zu bewegen. Der Schwellenwert kann sich insbesondere auf eine zwischen dem Hülsenkörper und dem Bolzenelement wirkende Scherkraft beziehen, die bei einer Verdrehung von Hülsenkörper und Bolzenelement zwischen diesen Teilen wirkt. Ein Lösen der drehfesten Kopplung kann insbesondere dann erwünscht sein, wenn der Hülsenkörper bereits an dem Werkstück fixiert ist und durch eine Dreh- und Axialbewegung des Bolzenelements relativ zu dem Hülsenkörper verformt werden soll.

Gemäß einer weiteren bevorzugten Ausführungsform umfasst das Bolzenelement ein Gewinde. Hierdurch kann beispielsweise ein mit Masse verbundener elektrischer Leiter durch Schraubverbindung an dem Bolzenelement bzw. dem Blindnietelement angeschlossen werden.

Das Blindnietelement umfasst eine dem Bolzenelement zugeordnete Mutter, wobei das Bolzenelement ein Gewinde aufweist. Die Mutter kann z.B. einen polygonförmigen, insbesondere sechseckigen Umfang aufweisen, sodass die Mutter mittels eines genormten Werkzeugschlüssels gedreht werden kann.

Das Blindnietelement umfasst eine Mutter, die mit dem Gewinde des Bolzenelements und einem Flanschabschnitt des Hülsenkörpers zusammenwirkt. Die Mutter ist die oben genannte, dem Bolzenelement zugeordnete Mutter. Vorzugsweise wird die Mutter dafür verwendet, das Blindnietelement durch eine gemeinsame Befestigungsbewegung an dem Werkstück zu fixieren und zu befestigen, wie nachfolgend noch genauer erläutert werden wird. Insbesondere kann eine Drehung der auf das Bolzenelement aufgeschraubten Mutter in Richtung des Flanschabschnitts in die bereits beschriebene Axialbewegung des Bolzenelements umgesetzt werden, durch die der Hülsenkörper zur finalen Befestigung des Blindnietelements umgeformt wird.

Die Offenbarung bezieht sich ferner auf ein Zusammenbauteil umfassend ein Werkstück und ein Blindnietelement insbesondere gemäß zumindest einer der vorstehend beschriebenen Ausführungsformen, wobei das Blindnietelement einen Hülsenkörper und ein durch den Hülsenkörper geführtes Bolzenelement umfasst. Das Blindnietelement ist in ein Loch des Werkstücks eingebracht und an dem Werkstück befestigt, insbesondere durch einen Formschluss des Hülsenkörpers. Wenigstens ein Kontaktabschnitt des Hülsenkörpers greift in eine Wandung des Lochs und/oder einen Bereich um das Loch ein, sodass zwischen dem Werkstück und dem Blindnietelement ein zuverlässiger mechanischer und/oder elektrischer Kontakt hergestellt ist.

Ferner bezieht sich die Erfindung, wie eingangs erwähnt, auf ein Verfahren zum Befestigen eines Blindnietelements an einem Werkstück, welches ein insbesondere vorgeformtes Loch aufweist, wobei das Blindnietelement insbesondere nach zumindest einem der vorstehend beschriebenen Ausführungsformen ausgebildet ist. Das Blindnietelement umfasst zumindest einen Hülsenkörper und ein durch den Hülsenkörper geführtes Bolzenelement. Das Verfahren umfasst, dass das Blindnietelement in das Loch des Werkstücks eingebracht wird und der Hülsenkörper durch eine Axialbewegung des Bolzenelements relativ zu dem Hülsenkörper abschnittsweise verformt wird, um das Blindnietelement an dem Werkstück zu befestigen. Im Zuge des Einbringens des Blindnietelements und/oder im Zuge des Befestigungsvorgangs wird wenigstens ein Kontaktabschnitt des Hülsenkörpers mit einer Wandung des Lochs und/oder mit einem Bereich um das Loch in Eingriff gebracht, um einen mechanischen und/oder elektrischen Kontakt zwischen dem Werkstück und dem Blindnietelement herzustellen.

Der Hülsenkörper wird durch eine erste Dreh- und/oder Axialbewegung in das Loch des Werkstücks eingebracht, wobei der Kontaktabschnitt in einem ersten Montageschritt durch die erste Dreh- und/oder Axialbewegung in die Wandung des Lochs und/oder den Bereich um das Loch einschneidet und/oder die Wandung des Lochs und/oder den Bereich um das Loch verformt, um zwischen dem Werkstück und dem Blindnietelement einen mechanischen und/oder elektrischen Kontakt herzustellen. Das Bolzenelement und der Hülsenkörper können während des ersten Montageschritts drehfest miteinander gekoppelt sein.

Nach einer Ausführungsform wird der Hülsenkörper in einem zweiten Montageschritt durch eine zweite Dreh- und/oder Axialbewegung verformt und dadurch an dem Werkstück befestigt, insbesondere wobei der Hülsenkörper bei dem zweiten Montageschritt im Wesentlichen in Ruhe ist.

Der zweite Montageschritt umfasst insbesondere eine Axialbewegung des Bolzenelements relativ zu dem Hülsenkörper, die durch eine Drehbewegung des Bolzenelements und/oder die durch eine dem Bolzenelement zugeordneten Mutter bewirkt wird. Hierbei wirkt die Mutter mit einem Flanschabschnitt des Hülsenkörpers zusammen, welcher mit einer Anlagefläche in einem Bereich um das Loch an dem Werkstück anliegt.

Gemäß einer bevorzugten Ausführungsform werden in dem ersten Montageschritt und dem zweiten Montageschritt Drehbewegungen mit der gleichen Drehrichtung ausgeführt. Insbesondere ist die Drehrichtung einer ersten Drehbewegung des Hülsenkörpers und/oder einer dem Bolzenelement zugeordneten Mutter identisch zu der Drehrichtung einer zweiten Drehbewegung der Mutter. Das Blindnietelement kann hierdurch besonders einfach an dem Werkstück befestigt werden. Beispielsweise werden der erste und der zweite Montageschritt dadurch bewirkt, dass durch ein an der Mutter angreifendes Werkzeug diese gedreht wird. Zunächst wird das Eindrehen des Hülsenkörpers bewirkt, bis dieser axial anschlägt. Eine weitere Drehbewegung der Mutter in dem gleichen Drehsinn führt dann zu einem axialen Verfahren des Bolzenelements und damit zur Verformung des Hülsenkörpers.

Die Erfindung wird im Folgenden lediglich beispielhaft anhand einer vorteilhaften Ausführungsform unter Bezugnahme auf die beigefügten Zeichnungen erläutert. Es zeigen:
- Fig. 1: eine Ausführungsform des erfindungsgemäßen Blindnietelements;
- Fig. 2: eine Draufsicht auf das Blindnietelement von Fig. 1;
- Fig. 3 bis 5: eine Ausführungsform des erfindungsgemäßen Verfahrens zur Befestigung des Blindnietelements von Fig. 1 bis 2 an einem Blechteil.

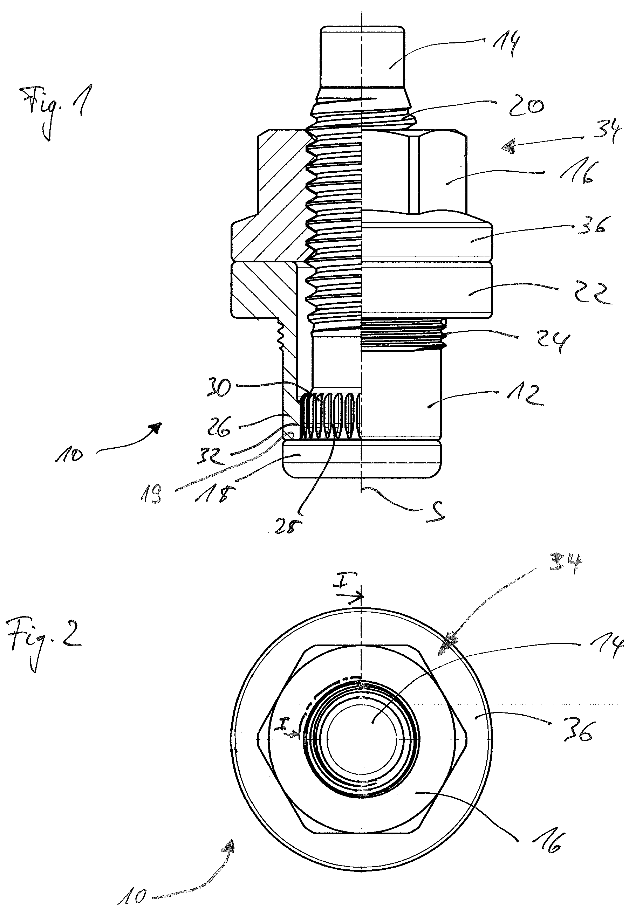

Fig. 1 zeigt ein rotationssymmetrisch ausgebildetes Blindnietelement 10, welches einen Hülsenkörper 12, ein durch den Hülsenkörper 12 geführtes Bolzenelement 14 sowie eine Mutter 16 umfasst. Das Bolzenelement 14 weist einen Bolzenkopf 18 auf, auf dessen Schulter 19 der Hülsenkörper 12 aufsitzt. Ferner weist das Bolzenelement 14 ein Gewinde 20 auf, welches mit einem Innengewinde der Mutter 16 zusammenwirkt, d.h. die Mutter 16 ist auf das Bolzenelement 14 im Bereich des Gewindes 20 aufgeschraubt.

Die Ansicht von Fig. 1 ist bezüglich einer Symmetrieachse S in eine linksseitige Schnittansicht und eine rechtsseitige Seitenansicht unterteilt. Die Schnittebene I bezüglich der linksseitigen Schnittansicht ist in Fig. 2 eingetragen. Hierbei ist zu beachten, dass die Schnittebene I abschnittsweise linear durch den Hülsenkörper 12 und die Mutter 16 verläuft. Darüber hinaus verläuft die Schnittebene I gekrümmt entlang des äußeren Umfangs des Bolzenelements 14, sodass das Bolzenelement 14 in der linksseitigen Schnittansicht von Fig. 1 effektiv in einer Seitenansicht dargestellt ist.

Im Folgenden wird das Blindnietelement von Fig. 1 näher erläutert.

Der Hülsenkörper 12 ist hohlzylindrisch ausgebildet und weist einen radial nach außen weisenden Flanschabschnitt 22 auf. Unterhalb des Flanschabschnitts 22 ist an dem Hülsenkörper 12 ein umlaufendes, selbstschneidendes Gewinde 24 vorgesehen, welches als Kontaktabschnitt des Blindnietelements 10 fungiert. Der Hülsenkörper 12 wirkt mit einem dem Flanschabschnitt 22 abgewandten Ende 26 mit dem Bolzenelement 14 zusammen, wobei in diesem Bereich eine drehfeste Kopplung zwischen dem Hülsenkörper 12 und dem Bolzenelement 14 hergestellt ist. Hierzu weist das Bolzenelement 14 einen Koppelabschnitt 28 auf, welcher umlaufend durch eine Vielzahl sich in axialer Richtung erstreckende Rippen 30 gebildet ist. Die Rippen 30 sind einheitlich zueinander beabstandet entlang des Umfangs des Bolzenelements 14 angeordnet. Der Hülsenkörper 12 weist an dem Ende 26 innenseitig einen umlaufenden Koppelabschnitt 32 auf, welcher analog zu dem Koppelabschnitt 28 rippenartig ausgebildet ist, wobei die betreffenden Rippen des Koppelabschnitts 32 jeweils zwischen die Rippen 30 des Koppelabschnitts 28 eingreifen (und umgekehrt). Zusätzlich kann der Hülsenkörper 12 im Bereich des Endes 26 an den Koppelabschnitt 28 des Bolzenelements 14 angedrückt sein, sodass zwischen dem Bolzenelement 14 und dem Hülsenkörper 12 auch eine entsprechende axiale Kopplung besteht. Das Ende 26 und die Schulter 19 sorgen zudem für eine Kopplung der Komponenten 12, 14 in axialer Richtung.

Die Mutter 16 ist als eine handelsübliche Mutter ausgebildet, welche einen polygonalen Abschnitt 34 (Umfangskontur eines regelmäßigen Sechsecks) und einen Flanschabschnitt 36 mit kreisrundem Querschnitt aufweist (vgl. Fig. 1 und 2).

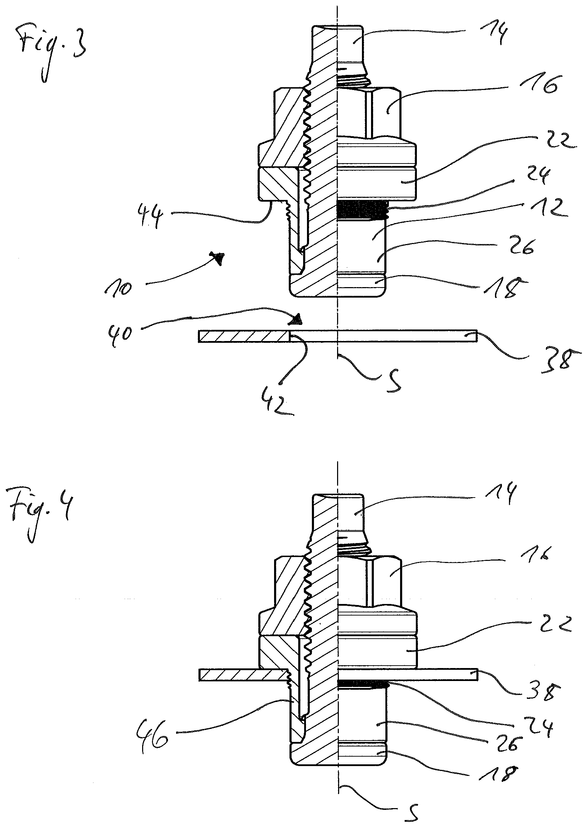

Anhand von Fig. 3 bis 5 wird nun beschrieben, wie das Blindnietelement 10 von Fig. 1 mittels des erfindungsgemäßen Verfahrens an einem Blechteil 38 befestigt wird.

Das Blechteil 38 weist bezüglich der Symmetrieachse S ein kreisrundes Loch 40 auf, dessen Durchmesser derart angepasst ist, dass das Blindnietelement 10 in das Loch 40 eingebracht werden kann (vgl. Fig. 3 und Fig. 4). Hierzu wird das Blindnietelement 10 mit dem Bolzenkopf 18 und dem Ende 26 des Hülsenkörpers 12 durch das Loch 40 geführt bis das Gewinde 24 des Hülsenkörpers 12 eine Wandung 42 des Lochs 40 berührt. Sodann wird die Mutter 16 mit einem nicht gezeigten Werkzeugschlüssel bezüglich der Perspektive von Fig. 2 im Uhrzeigersinn gedreht.

Grundsätzlich wird die Mutter 16 durch eine Drehung im Uhrzeigersinn in axialer Richtung in Richtung des Bolzenkopfs 18 bzw. Hülsenkörpers 12 relativ zu dem Bolzenelement 14 versetzt (Aufschrauben der Mutter 16 auf das Bolzenelement 14 in die in Fig. 3 gezeigte Position). Eine Drehung und ein hierdurch bewirktes axiales Versetzen der Mutter 16 relativ zu dem Bolzenelement 14 ist freilich aber nur möglich, wenn weder eine Axialbewegung der Mutter 16 noch eine Axialbewegung des Bolzenelements 14 blockiert wird. In der vorliegenden Ausführungsform wird eine Drehung der Mutter 16 im Uhrzeigersinn sowie eine hierdurch bewirkte Axialbewegung relativ zu dem Bolzenelement 14 blockiert, wenn die Mutter 16 auf dem Flanschabschnitt 22 des Hülsenkörpers 12 aufliegt und der Hülsenkörper 12 auf dem Bolzenkopf 18 des Bolzenelements 14 aufsitzt (Fig. 3). Dies ist dadurch begründet, dass insbesondere in dem in Fig. 3 gezeigten Zustand einerseits ein axiales Versetzten der Mutter 16 in Richtung des Hülsenkörpers 12 und andererseits ein gegenläufiges axiales Versetzen des Bolzenelements 14 in Richtung weg von dem Hülsenkörper 12 (in Fig. 3 nach oben) durch den Hülsenkörper 12 unmittelbar blockiert ist. Der Hülsenkörper 12 ist also letztlich zwischen der Mutter 16 und dem Bolzenkopf 18 eingespannt. Aus diesem Grund wird das Bolzenelement 14 bei einer Drehung der Mutter 16 im Uhrzeigersinn ab Eintreten der oben beschriebenen Blockierung zwangsweise mitbewegt. Im Zuge dieser Drehung wird insbesondere durch die ineinandergreifenden Koppelabschnitte 28, 32 (Fig. 1) auch der Hülsenkörper 12 mitgedreht. Mit anderen Worten wird durch die Drehung der Mutter 16 eine entsprechende Drehung des gesamten Blindnietelements 10 bewirkt.

Aus der obigen Beschreibung wird deutlich, dass durch eine Drehung der Mutter 16 im Uhrzeigersinn der Hülsenkörper 12 in das Loch 40 eingeschraubt wird, wobei das Gewinde 24 in die Wandung 42 des Lochs 40 einschneidet und einen zuverlässigen elektrischen Kontakt zwischen dem Blechteil 38 und dem Hülsenkörper 12 herstellt. Gleichzeitig sind die Mutter 16 und das Bolzenelement 14 aufgrund ihres mechanischen Kontakts ebenfalls elektrisch mit dem Hülsenkörper 12 bzw. dem Blechteil 38 verbunden, so dass an dem Bolzenelement 14 eine nicht gezeigte Leitung zur elektrischen Erdung des Blechteils 38 angeschlossen werden kann. Der Hülsenkörper 12 wird (durch die entsprechende Drehung der Mutter 16) im Uhrzeigersinn gedreht, bis der Flanschabschnitt 22 des Hülsenkörpers 12 mit einer dem Blechteil 38 zugewandten Anlagefläche 44 an dem Blechteil 38 anliegt (Fig. 4). Das Blindnietelement 10 ist nun an dem Blechteil 38 vorfixiert.

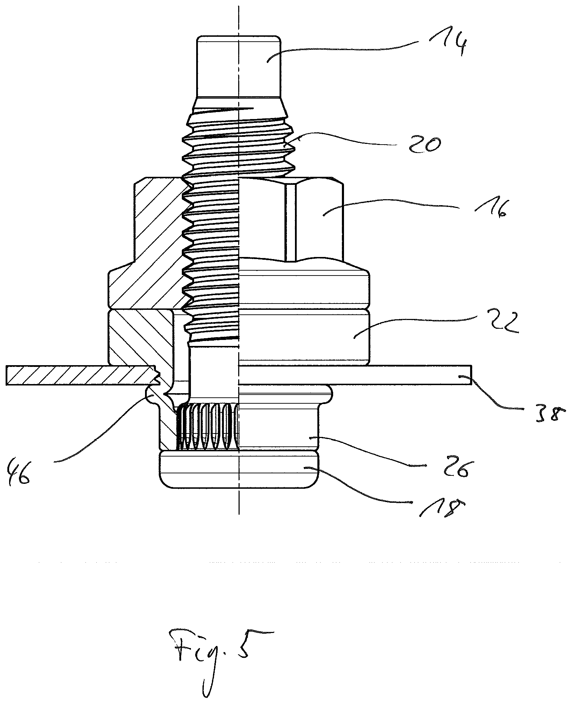

Ausgehend von dem in Fig. 4 gezeigten Zustand wird die Mutter 16 nun weiter im Uhrzeigersinn gedreht. Eine weitere Drehung des Hülsenkörpers 12 ist jetzt allerdings blockiert, da der Flanschabschnitt 22 des Hülsenkörpers 12 mit der Anlagefläche 44 an dem Blechteil 38 anliegt. Durch eine weitere Drehung der Mutter 16 wird nun eine Axialbewegung des Bolzenelements 14 relativ zu der Mutter 16 und dem Hülsenkörper 12 verursacht, wobei der Bolzenkopf 18 eine axiale Kraft auf den Hülsenkörper 12 ausübt. Während der weiteren Drehung der Mutter 16 wird also das Bolzenelement 14 zwangsweise nach oben in axialer Richtung bewegt (Fig. 4), wodurch der Hülsenkörper 12 deformiert wird. Konkret wird ein zwischen dem Ende 26 und dem Gewinde 24 liegender Abschnitt 46 des Hülsenkörpers 12 radial nach außen verformt, so dass der Abschnitt 46 das Blechteil 38 im Bereich um das Loch 40 im Sinne einer formschlüssigen Nietverbindung hintergreift (Fig. 5). Das Blindnietelement 10 ist nun sicher an dem Blechteil 38 befestigt.

Während der ganzen Drehung der Mutter 16 - also während dem Eindrehen des Hülsenkörpers 12 und dem "Herausziehen" des Bolzenelements 14 - bleibt die drehfeste Kopplung zwischen dem Hülsenkörper 12 und dem Bolzenelement 14 bestehen. Andernfalls bestünde die Gefahr, dass sich das Bolzenelement 14 mit der Mutter 16 mitdreht und sich nicht in der erwünschten Weise axial weg von dem Blechteil 38 bewegt, um den Hülsenkörper 12 wie oben beschrieben umzuformen.

Die Steigung des Gewindes 20 des Bolzenelements 14 entspricht einer Steigung des Innengewindes der Mutter 16 und ist daran angepasst, dass das notwendige Drehmoment zur Drehung der Mutter 16 bzw. zur resultierenden Axialbewegung des Bolzenelements 14 relativ zu der Mutter 16 unterhalb eines vorbestimmten Schwellenwerts liegt. Hierzu kann vorgesehen sein, dass die Steigung des Gewindes 20 einen vorbestimmten Wert nicht überschreiten soll.

Anstatt das Blindnietelement 10 wie beschrieben in das vorgeformte Loch 40 einzubringen ist es auch denkbar, das Blindnietelement 10 in das Blechteil 38 einzustanzen. Das separate Herstellen des Lochs 40 könnte dann entfallen.

Das Eindrehen des Hülsenkörpers 12 in das Loch 40 muss nicht notwendigerweise indirekt durch das Drehen der Mutter 16 ausgeführt werden. Vielmehr ist es auch möglich, den Hülsenkörper 12 unmittelbar selbst zu drehen, beispielsweise mit einer Zange, die an dem Flanschabschnitt 22 des Hülsenkörpers 12 angreift und zum Eindrehen des Hülsenkörpers 12 entsprechend gedreht wird.

Ebenso versteht es sich, dass das Bolzenelement 14 nicht notwendigerweise durch Drehen der Mutter 16 herausgezogen werden muss. So ist es denkbar, mittels geeigneter Werkzeuge, z.B. eines Hebels, direkt an dem Bolzenelement 14 anzugreifen, um es axial zu bewegen. Alternativ wäre es auch möglich, ein Werkzeug zu verwenden, mit dem das Bolzenelement 14 gegen den Uhrzeigersinn gedreht und die Mutter 16 gleichzeitig in einer Ruheposition gehalten wird. Während des Umformens des Hülsenkörpers 12 löst sich hierbei die Kopplung zwischen dem Hülsenkörper 12 und dem Bolzenelement 14, sodass das Bolzenelement 14 aus dem Blechteil 38 "herausgedreht" und relativ zum dem Hülsenkörper 12 in axialer Richtung bewegt wird.

### Bezugszeichenliste

- 10: Blindnietelement
- 12: Hülsenkörper
- 14: Bolzenelement
- 16: Mutter
- 18: Bolzen kopf
- 20: Gewinde
- 22: Flanschabschnitt
- 24: Gewinde
- 26: Ende
- 28: Koppelabschnitt
- 30: Rippe
- 32: Koppelabschnitt
- 34: polygonaler Abschnitt
- 36: Flanschabschnitt
- 38: Blechteil
- 40: Loch
- 42: Wandung
- 44: Anlagefläche
- 46: Abschnitt

- S: Achse
- I: Schnittebene

## Patentansprüche

1. Blindnietelement (10) zur Befestigung an einem Werkstück (38), welches ein insbesondere vorgeformtes Loch (40) aufweist, wobei
das Blindnietelement (10) einen Hülsenkörper (12) und ein durch den Hülsenkörper (12) geführtes Bolzenelement (14) umfasst,
das Blindnietelement (10) in das Loch (40) des Werkstücks (38) einbringbar ist und der Hülsenkörper (12) durch eine Axialbewegung des Bolzenelements (14) relativ zu dem Hülsenkörper (12) abschnittsweise verformbar ist, um das Blindnietelement (10) an dem Werkstück (38) zu befestigen, und
der Hülsenkörper (12) wenigstens einen Kontaktabschnitt (24) aufweist, welcher derart angeordnet und ausgestaltet ist, dass der Kontaktabschnitt (24) in eine Wandung (42) des Lochs (40) und/oder einen Bereich um das Loch (40) einschneidet und/oder eine Verformung der Wandung (42) des Lochs (40) und/oder des Bereichs um das Loch (40) bewirkt, insbesondere um zwischen dem Werkstück (38) und dem Blindnietelement (10) einen elektrischen Kontakt herzustellen,
**dadurch gekennzeichnet, dass**
der Kontaktabschnitt (24) wenigstens ein Gewinde (24) umfasst und dass das Blindnietelement (10) eine dem Bolzenelement (14) zugeordnete Mutter (16) umfasst, die mit einem Gewinde (20) des Bolzenelements (14) und einem Flanschabschnitt (22) des Hülsenkörpers (12) zusammenwirkt, insbesondere um das Bolzenelement (14) in axialer Richtung zu bewegen.

2. Blindnietelement (10) zur Befestigung an einem Werkstück (38), welches ein insbesondere vorgeformtes Loch (40) aufweist, wobei
das Blindnietelement (10) einen Hülsenkörper (12) und ein durch den Hülsenkörper (12) geführtes Bolzenelement (14) umfasst,
das Blindnietelement (10) in das Loch (40) des Werkstücks (38) einbringbar ist und der Hülsenkörper (12) durch eine Axialbewegung des Bolzenelements (14) relativ zu dem Hülsenkörper (12) abschnittsweise verformbar ist, um das Blindnietelement (10) an dem Werkstück (38) zu befestigen, und
der Hülsenkörper (12) wenigstens einen Kontaktabschnitt (24) aufweist, welcher derart angeordnet und ausgestaltet ist, dass der Kontaktabschnitt (24) in eine Wandung (42) des Lochs (40) und/oder einen Bereich um das Loch (40) einschneidet und/oder eine Verformung der Wandung (42) des Lochs (40) und/oder des Bereichs um das Loch (40) bewirkt, insbesondere um zwischen dem Werkstück (38) und dem Blindnietelement (10) einen elektrischen Kontakt herzustellen,
**dadurch gekennzeichnet, dass**
das Blindnietelement (10) eine dem Bolzenelement (14) zugeordnete Mutter (16) umfasst, die mit einem Gewinde (20) des Bolzenelements (14) und einem Flanschabschnitt (22) des Hülsenkörpers (12) zusammenwirkt, um das Bolzenelement (14) in axialer Richtung zu bewegen.

3. Blindnietelement (10) nach Anspruch 1 oder 2,
**dadurch gekennzeichnet, dass**
der Kontaktabschnitt (24) von dem Hülsenkörper (12) abgesetzt ist.

4. Blindnietelement (10) nach Anspruch 2, bzw. nach Anspruch 3, wenn dieser auf Anspruch 2 rückbezogen ist, **dadurch gekennzeichnet, dass** der Kontaktabschnitt (24) wenigstens eine umlaufende Kante, insbesondere ein Gewinde (24), und/oder wenigstens eine Rippe umfasst, die sich in axialer und/oder Umfangsrichtung erstreckt.

5. Blindnietelement (10) nach zumindest einem der vorhergehenden Ansprüche,
**dadurch gekennzeichnet, dass**
das Bolzenelement (14) und/oder der Hülsenkörper (12) wenigstens einen Koppelabschnitt (28,32) aufweist, welcher den Hülsenkörper (12) und das Bolzenelement (14) zumindest drehfest miteinander koppelt.

6. Blindnietelement (10) nach Anspruch 5,
**dadurch gekennzeichnet, dass**
der Koppelabschnitt (28, 32) mehrere sich in axialer Richtung erstreckende Rippen (30) umfasst.

7. Blindnietelement (10) nach Anspruch 5 oder 6,
**dadurch gekennzeichnet, dass**
der Koppelabschnitt (28, 32) derart ausgestaltet ist, dass der Hülsenkörper (12) und das Bolzenelement (14) bis zum Erreichen einen Schwellenwerts einer zwischen dem Hülsenkörper (12) und dem Bolzenelement (14) wirkenden Kraft miteinander gekoppelt sind.

8. Verfahren zum Befestigen eines Blindnietelements (10) an einem Werkstück (38), welches ein insbesondere vorgeformtes Loch (40) aufweist, wobei
das Blindnietelement (10) insbesondere nach zumindest einem der Ansprüche 1 bis 8 ausgebildet ist,
das Blindnietelement (10) einen Hülsenkörper (12) und ein durch den Hülsenkörper (12) geführtes Bolzenelement (14) umfasst,
das Blindnietelement (10) in das Loch des Werkstücks (38) eingebracht wird,
der Hülsenkörper (12) durch eine Axialbewegung des Bolzenelements (14) relativ zu dem Hülsenkörper (12) abschnittsweise verformt wird, um das Blindnietelement (10) an dem Werkstück (38) zu befestigen, und wobei
im Zuge des Einbringens des Blindnietelements (10) und/oder im Zuge des Befestigungsvorgangs wenigstens ein Kontaktabschnitt (24) des Hülsenkörpers (12) mit einer Wandung (42) des Lochs (40) und/oder mit einem Bereich um das Loch (40) in Eingriff gebracht wird, um insbesondere einen elektrischen Kontakt zwischen dem Werkstück (38) und dem Blindnietelement (10) herzustellen,
**dadurch gekennzeichnet, dass**
der Hülsenkörper (12) durch eine erste Drehbewegung einer auf das Bolzenelement aufgeschraubten Mutter in das Loch (40) des Werkstücks (38) eingebracht wird,
wobei der Kontaktabschnitt (24) in einem ersten Montageschritt durch die erste Drehbewegung in die Wandung (42) des Lochs (40) und/oder den Bereich um das Loch (40) einschneidet und/oder die Wandung (42) des Lochs (40) und/oder den Bereich um das Loch (40) verformt.

9. Verfahren nach Anspruch 8,
**dadurch gekennzeichnet, dass**
das Bolzenelement (14) und der Hülsenkörper (12) während dem ersten Montageschritt drehfest miteinander gekoppelt sind.

10. Verfahren nach Anspruch 8 oder 9,
**dadurch gekennzeichnet, dass**
der Hülsenkörper (12) in einem zweiten Montageschritt durch eine zweite Dreh- und/oder Axialbewegung verformt und dadurch an dem Werkstück (38) befestigt wird, insbesondere wobei der Hülsenkörper (12) bei dem zweiten Montageschritt im Wesentlichen in Ruhe ist.

11. Verfahren nach zumindest einem der Ansprüche 8 bis 10,
**dadurch gekennzeichnet, dass**
der zweite Montageschritt eine Axialbewegung des Bolzenelements (14) relativ zu dem Hülsenkörper (12) umfasst, die durch eine Drehbewegung des Bolzenelements (14) und/oder die durch eine dem Bolzenelement (14) zugeordneten Mutter (16) bewirkt wird, wobei die Mutter (16) mit einem Flanschabschnitt (22) des Hülsenkörpers (12) zusammenwirkt, welcher mit einer Anlagefläche (44) in einem Bereich um das Loch (40) an dem Werkstück (38) anliegt.

12. Verfahren nach zumindest einem der Ansprüche 8 bis 11,
**dadurch gekennzeichnet, dass**
in dem ersten Montageschritt und dem zweiten Montageschritt Drehbewegungen mit der gleichen Drehrichtung ausgeführt werden, insbesondere wobei eine erste Drehbewegung des Hülsenkörpers (12) und/oder einer dem Bolzenelement (14) zugeordneten Mutter (16) und eine zweite Drehbewegung der Mutter (16)
in die gleiche Drehrichtung ausgeführt werden.

## Claims

1. A blind rivet element (10) for fastening to a workpiece (38) which has a hole (40) which is in particular preshaped, wherein
the blind rivet element (10) comprises a sleeve body (12) and a bolt element (14) led through the sleeve body (12);
the blind rivet element (10) can be introduced into the hole (40) of the workpiece (38) and the sleeve body (12) is sectionally deformable by an axial movement of the bolt element (14) relative to the sleeve body (12) to fasten the blind rivet element (10) to the workpiece (38); and
the sleeve body (12) has at least one contact section (24) which is arranged and configured such that the contact section (24) cuts into a wall (42) of the hole (40) and/or into a region around the hole (40) and/or effects a deformation of the wall (42) of the hole (40) and/or of the region around the hole (40), in particular to establish an electrical contact between the workpiece (38) and the blind rivet element (10),
**characterized in that**
the contact section (24) comprises at least one thread (24); and **in that** the blind rivet element (10) comprises a nut (16) which is associated with the bolt element (14) and which cooperates with a thread (20) of the bolt element (14) and with a flange section (22) of the sleeve body (12), in particular to move the bolt element (14) in the axial direction.

2. A blind rivet element (10) for fastening to a workpiece (38) which has a hole (40) which is in particular preshaped, wherein
the blind rivet element (10) comprises a sleeve body (12) and a bolt element (14) led through the sleeve body (12);
the blind rivet element (10) can be introduced into the hole (40) of the workpiece (38) and the sleeve body (12) is sectionally deformable by an axial movement of the bolt element (14) relative to the sleeve body (12) to fasten the blind rivet element (10) to the workpiece (38); and
the sleeve body (12) has at least one contact section (24) which is arranged and configured such that the contact section (24) cuts into a wall (42) of the hole (40) and/or into a region around the hole (40) and/or effects a deformation of the wall (42) of the hole (40) and/or of the region around the hole (40), in particular to establish an electrical contact between the workpiece (38) and the blind rivet element (10),
**characterized in that**
the blind rivet element (10) comprises a nut (16) which is associated with the bolt element (14) and which cooperates with a thread (20) of the bolt element (14) and with a flange section (22) of the sleeve body (12) to move the bolt element (14) in the axial direction.

3. A blind rivet element (10) in accordance with claim 1 or claim 2,
**characterized in that**
the contact section (24) is set off from the sleeve body (12).

4. A blind rivet element (10) in accordance with claim 2 or in accordance with claim 3 if it is dependent on claim 2,
**characterized in that**
the contact section comprises at least one peripheral edge, in particular a thread (24), and/or at least one rib which extends in the axial and/or peripheral direction.

5. A blind rivet element (10) in accordance with at least one of the preceding claims,
**characterized in that**
the bolt element (14) and/or the sleeve body (12) has/have at least one coupling section (28, 32) which couples the sleeve body (12) and the bolt element (14) at least rotationally fixedly to one another.

6. A blind rivet element (10) in accordance with claim 5,
**characterized in that**
the coupling section (28, 32) comprises a plurality of ribs (30) extending in the axial direction.

7. A blind rivet element (10) in accordance with claim 5 or claim 6,
**characterized in that**
the coupling section (28, 32) is configured such that the sleeve body (12) and the bolt element (14) are coupled to one another up to a reaching of a threshold value of a force acting between the sleeve body (12) and the bolt element (14).

8. A method of fastening a blind rivet element (10) to a workpiece (38) which has a hole (40) which is in particular preshaped,
wherein
the blind rivet element (10) is in particular configured in accordance with at least one of the claims 1 to 7;
the blind rivet element (10) comprises a sleeve body (12) and a bolt element (14) led through the sleeve body (12);
the blind rivet element (10) is introduced into the hole of the workpiece (38);
the sleeve body (12) is sectionally deformed by an axial movement of the bolt element (14) relative to the sleeve body (12) to fasten the blind rivet element (10) to the workpiece (38); and wherein,
as part of the introduction of the blind rivet element (10) and/or as part of the fastening procedure, at least one contact section (24) of the sleeve body (12) is brought into engagement with a wall (42) of the hole (40) and/or with a region around the hole (40), in particular to establish an electrical contact between the workpiece (38) and the blind rivet element (10),
**characterized in that**
the sleeve body (12) is introduced into the hole (40) of the workpiece (38) by a first rotational movement of a nut screwed onto the bolt element, with the contact section (24) cutting into the wall (42) of the hole (40) and/or into the region around the hole (40) and/or deforming the wall (42) of the hole (40) and/or the region around the hole (40) in a first installation step by the first rotational movement.

9. A method in accordance with claim 8,
**characterized in that**
the bolt element (14) and the sleeve body (12) are rotationally fixedly coupled to one another during the first installation step.

10. A method in accordance with claim 8 or claim 9,
**characterized in that**
the sleeve body (12) is deformed and is thereby fastened to the workpiece (38) in a second installation step by a second rotational and/or axial movement, in particular with the sleeve body (12) being substantially at rest in the second installation step.

11. A method in accordance with at least one of the claims 8 to 10,
**characterized in that**
the second installation step comprises an axial movement of the bolt element (14) relative to the sleeve body (12) which is effected by a rotational movement of the bolt element (14) and/or which is effected by a nut (16) associated with the bolt element (14), with the nut (16) cooperating with a flange section (22) of the sleeve body (12) which contacts the workpiece (38) at a contact surface (44) in a region around the hole (40).

12. A method in accordance with at least one of the claims 8 to 11,
**characterized in that**
rotational movements having the same direction of rotation are carried out in the first installation step and in the second installation step,
in particular with a first rotational movement of the sleeve body (12) and/or of a nut (16) associated with the bolt element (14) and a second rotational movement of the nut (16) being carried out in the same direction of rotation.

## Revendications

1. Élément de rivet aveugle (10) pour la fixation à une pièce à oeuvrer (38), qui présente en particulier un trou préformé (40),
dans lequel
l'élément de rivet aveugle (10) comprend un corps de manchon (12) et un élément de boulon (14) mené à travers le corps de manchon (12), l'élément de rivet aveugle (10) peut être inséré dans le trou (40) de la pièce à oeuvrer (38), et le corps de manchon (12) peut être déformé localement par un mouvement axial de l'élément de boulon (14) par rapport au corps de manchon (12) pour fixer l'élément de rivet aveugle (10) à la pièce à oeuvrer (38), et
le corps de manchon (12) présente au moins une portion de contact (24) qui est agencée et conçue de telle sorte que la portion de contact (24) coupe dans une paroi (42) du trou (40) et/ou dans une zone autour du trou (40) et/ou provoque une déformation de la paroi (42) du trou (40) et/ou de la zone autour du trou (40), en particulier pour établir un contact électrique entre la pièce à oeuvrer (38) et l'élément de rivet aveugle (10),
**caractérisé en ce que**
la portion de contact (24) comprend au moins un filetage (24) et **en ce que** l'élément de rivet aveugle (10) comprend un écrou (16) qui est associé à l'élément de boulon (14) et qui coopère avec un filetage (20) de l'élément de boulon (14) et avec une portion de bride (22) du corps de manchon (12), en particulier pour déplacer l'élément de boulon (14) dans la direction axiale.

2. Élément de rivet aveugle (10) pour la fixation à une pièce à oeuvrer (38), qui présente en particulier un trou préformé (40),
dans lequel
l'élément de rivet aveugle (10) comprend un corps de manchon (12) et un élément de boulon (14) mené à travers le corps de manchon (12), l'élément de rivet aveugle (10) peut être inséré dans le trou (40) de la pièce à oeuvrer (38), et le corps de manchon (12) peut être déformé localement par un mouvement axial de l'élément de boulon (14) par rapport au corps de manchon (12) pour fixer l'élément de rivet aveugle (10) à la pièce à oeuvrer (38), et
le corps de manchon (12) présente au moins une portion de contact (24) qui est agencée et conçue de telle sorte que la portion de contact (24) coupe dans une paroi (42) du trou (40) et/ou dans une zone autour du trou (40) et/ou provoque une déformation de la paroi (42) du trou (40) et/ou de la zone autour du trou (40), en particulier pour établir un contact électrique entre la pièce à oeuvrer (38) et l'élément de rivet aveugle (10),
**caractérisé en ce que**
l'élément de rivet aveugle (10) comprend un écrou (16) qui est associé à l'élément de boulon (14) et qui coopère avec un filetage (20) de l'élément de boulon (14) et avec une portion de bride (22) du corps de manchon (12), en particulier pour déplacer l'élément de boulon (14) dans la direction axiale.

3. Élément de rivet aveugle (10) selon la revendication 1 ou 2,
**caractérisé en ce que**
la portion de contact (24) est décalée du corps de manchon (12).

4. Élément de rivet aveugle (10) selon la revendication 2 ou selon la revendication 3 prise en dépendance de la revendication 2,
**caractérisé en ce que**
la portion de contact (24) comprend au moins une arête périphérique, en particulier un filetage (24), et/ou au moins une nervure qui s'étend en direction axiale et/ou périphérique.

5. Élément de rivet aveugle (10) selon l'une au moins des revendications précédentes,
**caractérisé en ce que**
l'élément de boulon (4) et/ou le corps de manchon (12) présente(nt) au moins une portion d'accouplement (28, 32) qui accouple le corps de manchon (12) et l'élément de boulon (14) au moins solidairement en rotation l'un avec l'autre.

6. Élément de rivet aveugle (10) selon la revendication 5,
**caractérisé en ce que**
la portion d'accouplement (28, 32) comprend plusieurs nervures (30) qui s'étendent en direction axiale.

7. Élément de rivet aveugle (10) selon la revendication 5 ou 6,
**caractérisé en ce que**
la portion d'accouplement (28, 32) est réalisée de telle sorte que le corps de manchon (12) et l'élément de boulon (14) sont accouplés l'un avec l'autre jusqu'à atteindre une valeur seuil d'une force qui agit entre le corps de manchon (12) et l'élément de boulon (14).

8. Procédé pour la fixation d'un élément de rivet aveugle (10) à une pièce à oeuvrer (38), qui présente en particulier un trou préformé (40),
dans lequel
l'élément de rivet aveugle (10) est réalisé en particulier selon l'une au moins des revendications 1 à 8,
l'élément de rivet aveugle (10) comprend un corps de manchon (12) et un élément de boulon (14) mené à travers le corps de manchon (12), l'élément de rivet aveugle (10) est inséré dans le trou de la pièce à oeuvrer (38),
le corps de manchon (12) est déformé localement par un mouvement axial de l'élément de boulon (14) par rapport au corps de manchon (12) pour fixer l'élément de rivet aveugle (10) à la pièce à oeuvrer (38), et
au cours de l'insertion de l'élément de rivet aveugle (10) et/ou au cours de l'opération de fixation, au moins une portion de contact (24) du corps de manchon (12) est amenée en engagement avec une paroi (42) du trou (40) et/ou avec une zone autour du trou (40), en particulier pour établir un contact électrique entre la pièce à oeuvrer (38) et l'élément de rivet aveugle (10),
**caractérisé en ce que**
le corps de manchon (12) est inséré dans le trou (40) de la pièce à oeuvrer (38) par un premier mouvement de rotation d'un écrou vissé sur l'élément de boulon,
lors d'une première étape de montage, la portion de contact (24) coupe dans la paroi (42) du trou (40) et/ou dans la zone autour du trou (40) et/ou déforme la paroi (42) du trou (40) et/ou la zone autour du trou (40), par le premier mouvement de rotation.

9. Procédé selon la revendication 8,
**caractérisé en ce que**
l'élément de boulon (14) et le corps de manchon (12) sont accouplés solidairement en rotation l'un avec l'autre pendant la première étage de montage.

10. Procédé selon la revendication 8 ou 9,
**caractérisé en ce que**
lors d'une seconde étape de montage, le corps de manchon (12) est déformé par un second mouvement de rotation et/ou axial et est ainsi fixé à la pièce à oeuvrer (38), et en particulier le corps de manchon (12) est sensiblement au repos lors de la seconde étape de montage.

11. Procédé selon l'une au moins des revendications 8 à 10,
**caractérisé en ce que**
la seconde étape de montage inclut un mouvement axial de l'élément de boulon (14) par rapport au corps de manchon (12), qui est provoqué par un mouvement de rotation de l'élément de boulon (14) et/ou par un écrou (16) associé à l'élément de boulon (14), l'écrou (16) coopérant avec une portion de bride (22) du corps de manchon (12), qui s'appuie contre la pièce à oeuvrer (38) dans une zone autour du trou (40) par une surface d'appui (44).

12. Procédé selon l'une au moins des revendications 8 à 11,
**caractérisé en ce que**
lors de la première étape de montage et de la seconde étape de montage, des mouvements de rotation s'effectuent dans la même direction de rotation, et
en particulier, un premier mouvement de rotation du corps de manchon (12) et/ou d'un écrou (16) associé à l'élément de boulon (14), et un second mouvement de rotation de l'écrou (16) sont effectués dans la même direction de rotation.
